# EUROPEAN PATENT SPECIFICATION

(11) **EP 2 950 008 B1**
(45) Date of publication and mention of the grant of the patent: **11.04.2018**
(21) Application number: 14182785.7
(22) Date of filing: 29.08.2014
(51) Int. Cl.: F24F 5/00, E04B 9/04, E04C 2/08, E04C 2/52, F24D 3/16, F28F 1/16

(54) **Monolithic cooling or heating radiant panel arrangement**
Anordnung aus einstückigen Kühl- oder Heizpaneelen
Arrangement de panneaux radiants monolithiques pour chauffer où refroidir

(30) Priority: 26.05.2014 IN CH25812014
(43) Date of publication of application: 02.12.2015
(73) Proprietor: Infosys Limited, Bangalore 560 100 (IN)
(72) Inventor: Parikh, Rohan M., 560029 Bangalore (IN); Murthy, Sagar Narayana, 560097 Bangalore (IN); Raju, Vegesana Venkata Satya Suryanarayana, 560067 Bangalore (IN); Hegde Manoj Bhaskar, 575001 Mangalore (IN); Desai, Punit Hemant, 370201 Gandhidham (IN)
(74) Representative: Viering, Jentschura & Partner mbB Patent- und Rechtsanwälte

(56) References cited:
- EP-A1- 0 333 032
- EP-A2- 1 219 905
- WO-A1-02/06734
- GB-A- 658 767
- GB-A- 2 156 063

## Description

### FIELD OF THE INVENTION

The invention generally relates to a monolithic radiant panel arrangement.

Document GB 658 767 A discloses a monolithic radiant panel arrangement according to the preamble of claim 1. Further radiant panel arrangements are known from GB 2 156 063 A, WO 02/06734 A1, and EP 333 032 A1.

### BACKGROUND OF THE INVENTION

Traditionally, radiant systems have been used for heating or cooling an indoor area by circulating a fluid through pipes. Such pipes may be laid under a floor of the indoor area or ceiling of the indoor area. The radiant systems are configured to emit radiant energy. Transfer of the radiant energy is caused by a surface emitting/transferring heat to another surface. This radiant energy travels through space without heating space itself. If the indoor area is required to be heated, then a heated fluid is circulated through the pipes. If the indoor area is required to be cooled, then a chilled fluid is circulated through the pipes. Thermal energy radiating from people and objects in the indoor area is absorbed by ceiling or walls in the indoor area resulting in lowering mean radiant temperature of the indoor area.

The radiant systems use radiant panels. The radiant panels consist of a panel surface, a pipe for fluid circulation and a heat transfer element for transferring heat from chilled/heated fluid. The panel surface is typically composed of metal or gypsum. A cooling capacity of a radiant panel is dependent on an arrangement of the pipe with respect to the heat transfer element and connection of the heat transfer element with the panel surface. Any air gap in these connections reduces heat transfer efficiency. Additionally internal resistance of materials used in the radiant panels may act as a barrier for transferring heat from the panel surface to the fluid. Additionally, to facilitate fluid flow a secondary fluid distribution system such as a manifold is used for intercepting fluid and circulating fluid at a uniform flow rate.

In general, the heating/cooling fluid circulates between the ends of a radiant panel to provide the heating/cooling. When multiple radiant panels are connected in series, then the fluid flows through two or more panels starting from the first radiant panel to the last radiant panel. This results in the fluid flowing at varying temperatures across the series of radiant panels.

Traditional radiant panels also occupy a greater surface area especially of a ceiling of the indoor area. This leaves less space to fit additional interior elements, Thus, installation of the radiant panels along with other interior elements on the ceiling becomes very complex. The radiant panels are generally available in dimensions of 600mm x 1200mm or 600 x 600 mm. Further, the radiant panels are required to be connected in series for installation of these panels at the ceiling. A joint is required every 1.2 meters to connect the radiant panels in series. Such a joint may pose potential risk of breakage and/or leakage.

The radiant panels are generally attached with the ceiling of the indoor area and placed in a horizontal position. This results in dissipation of heat from a side of the radiant panel facing the ceiling. Typically, in order to overcome this, the radiant panels include an insulating layer on one side of the radiant panel. This insulating layer prevents dissipation of heat from the side of the radiant panel. Accordingly, one side of the radiant panel cannot be used for radiating heat.

Additionally, the traditional radiant panels are composed of multiple materials that pose difficulty in transportation and installation of the radiant panels. Construction and components used in such radiant panels are fragile in nature and thus require extra attention during transportation and installation of the traditional radiant panels.

In view of the above, there exists a need for an improved radiant panel arrangement for providing heating and/or cooling to an indoor area.
According to the present invention, this object is attained by a monolithic radiant panel arrangement according to claim 1. Preferred embodiments are defined in the dependent claims.

### BRIEF DESCRIPTION OF THE FIGURES

The accompanying figures where like reference numerals refer to identical or functionally similar elements throughout the separate views and which together with the detailed description below are incorporated in and form part of the specification, serve to further illustrate various embodiments and to explain various principles and advantages all in accordance with the method and system disclosed herein.
FIG. 1 illustrates a simplified diagram of a monolithic radiant panel for providing one of heating and cooling in an indoor area in accordance with an embodiment of the invention.
FIG. 2 illustrates a simplified diagram of attachment of a plurality of monolithic radiant panels with a surface of an indoor area using one or more support structures in accordance with an embodiment of the invention.
FIG. 3 illustrates a simplified diagram of attachment of the monolithic radiant panel with surface of the indoor area for reflecting light from an outdoor area to the indoor area in accordance with an embodiment of the invention.
FIG. 4 illustrates a simplified diagram of a first fluid flow circuit and a second fluid flow circuit configured to circulate a fluid among a plurality of monolithic radiant panels in accordance with an embodiment of the invention.
FIG. 5 illustrates an integrated heat transfer system for providing one of heating and cooling in an indoor area.
FIG. 6 illustrates an integrated heat transfer system for providing one of heating and cooling in an indoor area in accordance with another example.

### DETAILED DESCRIPTION

As required, embodiments of the system are disclosed herein; however, it is to be understood that the disclosed embodiments are merely exemplary of the system, which can be embodied in various forms. Therefore, specific functional details disclosed herein are not to be interpreted as limiting, but merely as a representative basis for teaching one skilled in the art to variously employ the system and method disclosed herein in virtually any appropriately detailed structure. Further, the terms and phrases used herein are not intended to be limiting but rather to provide an understandable description of the system and method disclosed herein.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly, and not necessarily mechanically.

Before describing in detail, embodiments that are in accordance with the system disclosed herein, it should be observed that the embodiments reside primarily in combinations of system elements related to a monolithic radiant panel for providing heating or cooling to an indoor area. Accordingly, the system elements have been represented where appropriate by conventional symbols in the drawings, showing only those specific details that are pertinent to understanding the embodiments of the system disclosed herein so as not to obscure the disclosure with details that will be readily apparent to those of ordinary skill in the art having the benefit of the description herein.

In this document, relational terms such as first and second, and the like may be used solely to distinguish one entity or action from another entity or action without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises ...a" does not, without more constraints, preclude the existence of additional identical elements in the process, method, article, or apparatus that comprises the element.

Generally speaking, pursuant to various embodiments, the invention provides a monolithic radiant panel arrangement comprising a plurality of monolithic radiant panels for providing one of heating and cooling in an indoor area. The monolithic radiant panel includes a tubular portion for circulating fluid. The fluid is circulated to provide one of heating and cooling in the indoor area. The monolithic radiant panel additionally includes two co-planar fin portions that are arranged diametrically opposite to each other about a periphery of the tubular portion. One or more of the tubular portion and one or more of the two co-planar fin portions are configured to be attached with a surface of the indoor area at an angle, wherein the surface can be one of, but not limited to, a ceiling and a wall. The angle may be anywhere in between 0 degrees to 90 degrees. In addition, one or more of the tubular portion and one or more of the two co-planar fin portions may be attached with the surface using an insulating material.

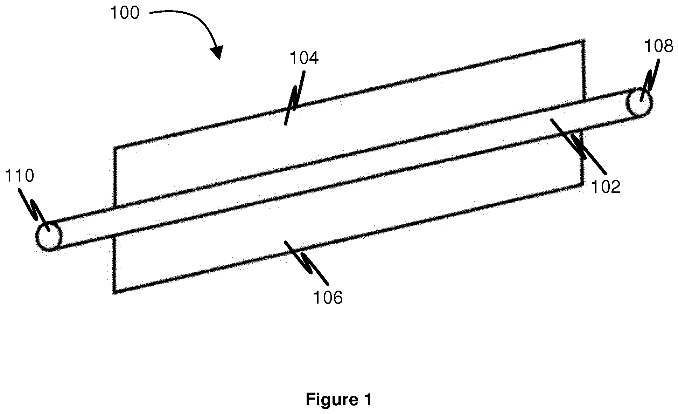

FIG.1 illustrates a simplified diagram of a monolithic radiant panel 100 for providing one of heating and cooling in an indoor area in accordance with an embodiment of the invention.

Monolithic radiant panel 100 is about 3 meters to about 16 meters in length, about 100 millimeters to about 300 millimeters in width and about 1.5 millimeters to about 4 millimeters in thickness. Dimensions of monolithic radiant panel 100 may be altered according to requirement. For example, if monolithic radiant panel 100 is used in an indoor area such as a small meeting room, then monolithic radiant panel 100 is 4 meters in length, 200 millimeters in width and 1.5 millimeters in thickness. Similarly, if monolithic radiant panel is used in a large hall, then monolithic radiant panel is 16 meters in length, 300 millimeters in width and 4 millimeters in thickness.

Monolithic radiant panel 100 is composed of a single material. The single material may be one of, but not limited to, aluminum, an alloy of aluminum and copper and as such those alloys that would be apparent to those ordinarily skilled in the art. In an embodiment, aluminum alloy 6063 is used as the single material for monolithic radiant panel 100. Additionally, monolithic radiant panel 100 is coated with a coating that has high American Architectural Manufacturers Association (AAMA) and Architectural Spray Coaters Association (ASCA) standards. This coating assists in maintaining an emissivity of monolithic radiant panel 100 in the range of 0.9 to 0.99. For example, a powder coating having a rating of AAMA 2604 is applied on monolithic radiant panel 100 to maintain an emissivity of monolithic radiant panel 100 at 0.99.

In one embodiment, monolithic radiant panel 100 is extruded using the single material and includes a tubular portion 102 and a first fin portion 104 and second fin portion 106. The extrusion is performed such that tubular portion 102 is formed at a middle portion of monolithic radiant panel 100 as illustrated in FIG. 1. Further, tubular portion 102 has an outer diameter of about 12 millimeters to about 21 millimeters and an inner diameter of about 10 millimeters to about 18 millimeters. Dimensions of tubular portion 102 may vary based on total dimension on monolithic radiant panel. For example, if monolithic radiant panel is used is 4 meters in length, 200 millimeters in width and 1.5 millimeters in thickness, then outer diameter of tubular portion 102 is 13 millimeters and inner diameter is 10 millimeters. Tubular portion 102 is configured to circulate fluid. The fluid may be water or any other suitable fluid suitable for heating/cooling. The circulation of fluid enables one of heating or cooling the indoor area.

First fin portion 104 and second fin portion 106 are arranged diametrically opposite to each other about a periphery of tubular portion 102. Each of first fin portion 104 and second fin portion 106 may be shaped as one of a square shape and a rectangular shape. One of first fin portion 104 and second fin portion 106 may be configured to be attached with a surface of the indoor area at an angle. The angle can be anywhere between 0 to 90 degrees from the surface. In one embodiment, the angle is 90 degrees. Accordingly, both exposed surfaces of monolithic radiant panel 100 can be used as a radiating surface.

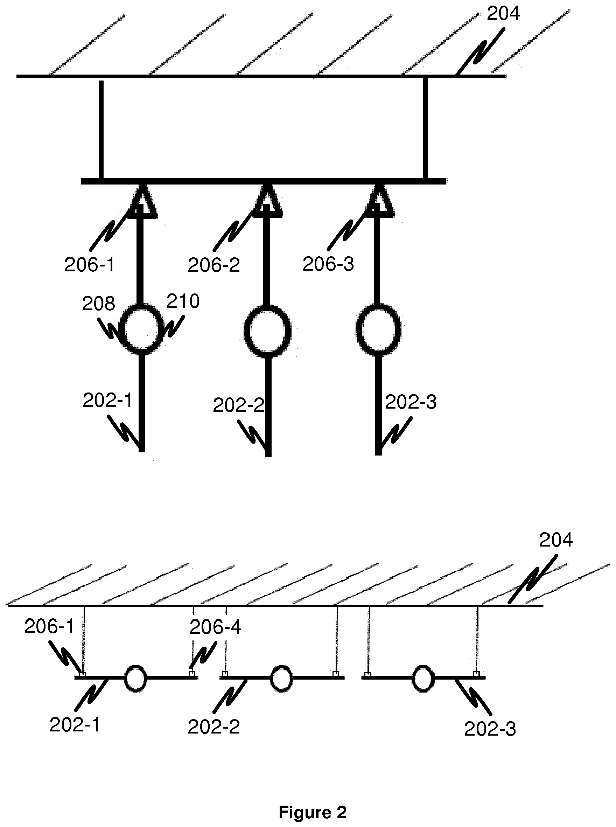

Alternately, both first fin portion 104 and second fin portion 106 are configured to be attached with the surface of the indoor area. The attachment of both first fin portion 104 and second fin portion 106 with the surface arranges monolithic radiant panel 100 in a horizontal position (as illustrated in FIG. 2). Optionally, tubular portion 102 may be configured to be attached with the surface of the indoor area. Thus, tubular portion 102 may be used alone to attach monolithic radiant panel 100 at an angle or in combination with one or more of first fin portion 104 and second fin portion 106 for attaching monolithic radiant panel 100 horizontally with the surface of indoor area.

The surface of the indoor area may be a ceiling or a wall of the indoor area. In an embodiment, monolithic radiant panel 100 may be attached with the surface in a way that monolithic radiant panel 100 is configured to function as one of a false ceiling and a false wall.

In an embodiment, monolithic radiant panel 100 is configured to function as an integrated hydronic radiant fin unit that is configured to provide one of heating and cooling in the indoor area. The integrated hydronic radiant fin unit includes a tubular portion such as tubular portion 102 that is configured to circulate water. The integrated hydronic fin unit also includes two co-planar fin portions such as first fin portion 104 and second fin portion 106 arranged diametrically opposite to each other about a periphery of the tubular portion.

Monolithic radiant panel 100 may also include one or more interlocking members such as first interlocking member 108 and second interlocking member 110. The one or more interlocking members can be formed after monolithic radiant panel 100 has been extruded. The one or more interlocking members can be used for interlocking two similar monolithic radiant panels and/or connecting a fluid supply tube. Such a connection also eliminates the need for having a distribution manifold between the primary fluid source and the monolithic radiant panels.

FIG.1 illustrates first interlocking member 108 and second interlocking member 110 of tubular portion 102. First interlocking member 108 and second interlocking member 110 protrudes from tubular portion 102 and can be used as a fitting portion to interlock monolithic radiant panel 100 with another similar monolithic radiant panel, wherein the interlocking enables the tubular portions of both the panels to be coaxially aligned. The interlocking of the monolithic radiant panels may be performed to form a row of monolithic radiant panels.

Monolithic radiant panel 100 is configured to be arranged at a distance of 0 millimeters to about 300 millimeters from other similar monolithic radiant panels. The distance between the panels can be varied according to dimensions of the indoor area and the desired heating/cooling rate.

In an embodiment, monolithic radiant panel 100 is configured to be arranged along with a plurality of similar monolithic radiant panels about a surface of the indoor area. The arrangement of monolithic radiant panel 100 along with the plurality of similar monolithic radiant panels is performed in one or more of a serial alignment and a parallel alignment. For example, the arrangement can include two monolithic radiant panels serially connected. Alternately, the arrangement can include two monolithic radiant panels arranged in parallel, wherein the distance between the two panels is about 75 millimeters. Taking yet another example, multiple monolithic radiant panels can be connected, wherein some of the panels are in parallel and some are in series. It would be apparent to one skilled in the art that there could be numerous variations in the arrangement. Further, all the monolithic panels in an arrangement can have identical dimensions or different monolithic panels can have different dimensions according to the desired heating/cooling rate.

Monolithic radiant panel 100 can be arranged with the plurality of similar monolithic radiant panels such that the arrangement assists in achieving a heat transfer rate of about 170 watts per square meter to 250 watts per square meter. The heat transfer rate can be enabled at a temperature difference of about 10 degrees Celsius between average surface temperature of monolithic radiant panel 100 and average temperature of the indoor area. In an exemplary arrangement, a heat transfer rate of 200 watts per square meter is achieved when a temperature difference of 10 degrees Celsius is maintained between average surface temperature of monolithic radiant panel 100 and average temperature of the indoor area. In this arrangement, each of monolithic radiant panel 100 and the plurality of similar monolithic radiant panels is 6 meter in length, 150 millimeter in width and 1.5 millimeter in thickness. Further, the arrangement includes the monolithic radiant panels arranged in a parallel configuration, wherein the space between two panels is 100 mm.

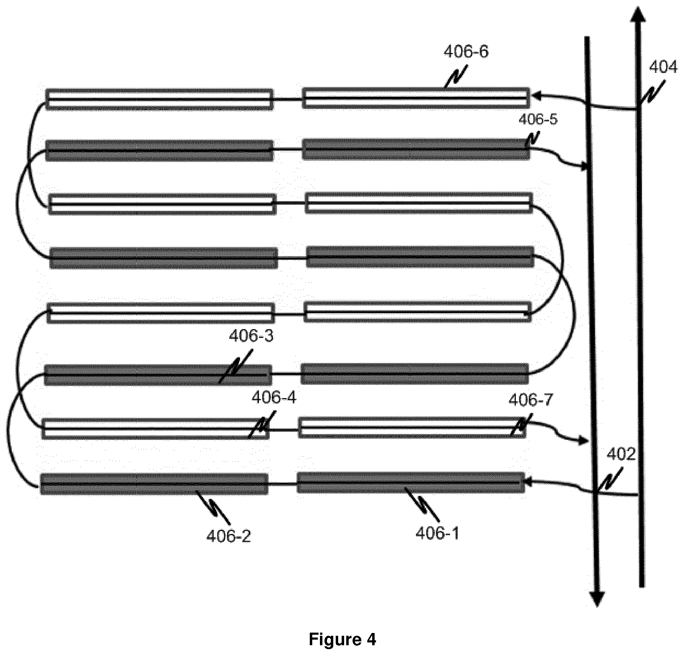

In addition, monolithic radiant panel 100 along with the plurality of monolithic radiant panels can be arranged to form two parallel fluid flow circuits (described in detail in conjunction with description of FIG. 4).

FIG. 2 illustrates a simplified diagram of attachment of monolithic radiant panels 202-n with a surface 204 of an indoor area using one or more support structures 206-n in accordance with an embodiment of the invention. As illustrated in FIG. 2, monolithic radiant panel 202-1, monolithic radiant panel 202-2 and monolithic radiant panel 202-3 are attached with surface 204 using support structure 206-1, support structure 206-2 and support structure 206-3 respectively. Support structure 206-n is configured to clamp one of, a first fin portion and a second fin portion of monolithic radiant panel 100. Support structure 206-n may be one of, but not limited to, C-clamp, clip and a fixture. Additionally, support structure 206-n is composed of an insulating material, thereby preventing transfer of heat between monolithic radiant panels 202-n and surface 204.

FIG. 2 also illustrates attachment of monolithic radiant panels 202-n with surface 204 at an angle. The angle may be about 0 degrees to 90 degrees. For example, when monolithic radiant panel 202-1 is attached at an angle of 90 degrees, then monolithic radiant panel 202-1 is in a vertical position. This vertical position enables heat transfer to the indoor area from first side 208 and side 210 of monolithic radiant panel 202-1. Similarly, when monolithic radiant panel 202-1 is attached at an angle of 0 degrees, then both fin portions of monolithic radiant panel 202-1 are attached with surface 204 using support structures 206-1 and support structure 206-4. FIG. 2 also illustrates attachment of monolithic radiant panel 202-2 and monolithic radiant panel 202-3 with surface 204 at an angle.

Distance between monolithic radiant panels 202-n varies according to the angle at which similar monolithic radiant panels are arranged together. For example, when monolithic radiant panel 202-1 and monolithic radiant panel 202-2 are attached with surface 204 at 0 degrees angle, then distance between monolithic radiant panel 202-1 and monolithic radiant panel 202-2 is about 0 millimeter. Similarly, when monolithic radiant panel 202-1 and monolithic radiant panel 202-2 are attached with surface 204 at 90 degrees angle, then distance between monolithic radiant panel 202-1 and monolithic radiant panel 202-2 is 300 millimeters.

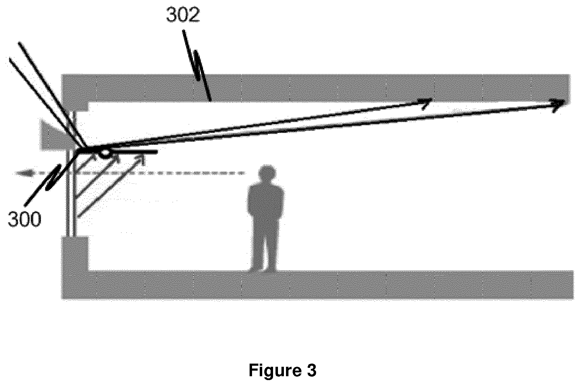

FIG. 3 illustrates a simplified diagram of attachment of monolithic radiant panel 300 attached with surface 302 of the indoor area for reflecting light from an outdoor area to the indoor area in accordance with an embodiment of the invention. In this arrangement, monolithic radiant panel 300 absorbs heat ingress on a side of monolithic radiant panel 300. This heat ingress is caused due to glazing. This assists in heat absorption. In an embodiment, multiple monolithic radiant panels may be attached with surface 302 at 0 degree to form a light shelf.

FIG. 4 illustrates a simplified diagram of a first fluid flow circuit 402 and a second fluid flow circuit 404 configured to circulate a fluid among a plurality of monolithic radiant panels 406-n in accordance with an embodiment of the invention. As shown in FIG. 4, plurality of monolithic radiant panels 406-n are arranged in one or more of a serial configuration and a parallel configuration to form two parallel fluid flow circuits such as first fluid flow circuit 402 and second fluid flow circuit 404. As shown in FIG. 4, first fluid flow circuit 402 includes a monolithic radiant panel 406-1 that is connected in a serial configuration with another monolithic radiant panel 406-2. Further, monolithic radiant panel 406-2 is connected with a monolithic radiant panel 406-3 in a parallel configuration with a monolithic radiant panel 406-4 in between. Monolithic radiant panel 406-4 is part of second fluid flow circuit 404. The serial configuration and parallel configuration assists in forming two parallel fluid flow circuits, wherein the fluid flow in the two circuits is opposing one another. In first fluid flow circuit 402, fluid enters from monolithic radiant panel 406-1 and exits from a monolithic radiant panel 406-5. In second fluid flow circuit 404 fluid enters from a monolithic radiant panel 406-6 and exits from a monolithic radiant panel 406-7. This provides a counter fluid flow arrangement that ensures uniform temperature across the indoor area.

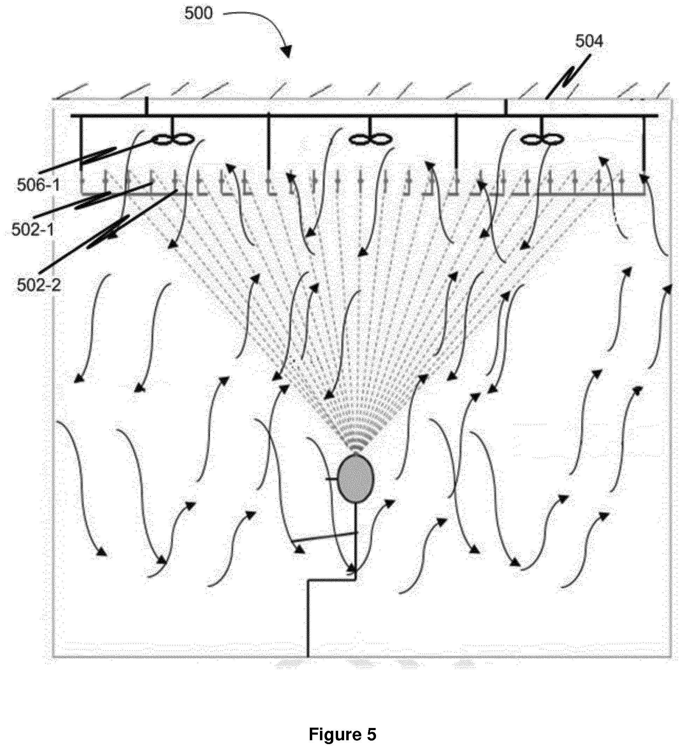

Moving on, FIG. 5 illustrates an integrated heat transfer system 500 for providing one of heating and cooling in an indoor area. As shown in FIG. 5, integrated heat transfer system 500 includes a plurality of monolithic radiant panels 502-n arranged about a surface 504 of the indoor area. Each monolithic radiant panel of the plurality of monolithic radiant panels 502-n is similar to monolithic radiant panel 100. The plurality of monolithic radiant panels 502-n is arranged in a parallel and/or serial configuration for providing one of heating and cooling in the indoor area. The arrangement of the plurality of monolithic radiant panels 502-n is configured to occupy about 30 percent to about 50 percent of surface 504 of the indoor area.

The integrated heat transfer system 500 includes an air convection assembly configured to force air convection in the indoor area. The air convection assembly can be disposed between the surface 504 of the indoor area and plurality of monolithic radiant panels 502-n. The air convection assembly may include one or more of one or more fans 506-n and a blower system. For example, fan 506-1 can be arranged between surface 504 and monolithic radiant panel 502-1 and monolithic radiant panel 502-2. The air convection assembly circulates air upward or downward and in turn increases heat transfer efficiency of integrated heat transfer system 500.

Further, integrated heat transfer system 500 includes a fluid source that is capable of circulating fluid directly to the plurality of monolithic radiant panels 502-n without requiring a manifold. Avoidance of manifold eliminates the requirement of an additional fluid distribution system between the fluid source and the plurality of monolithic radiant panels 502-n.

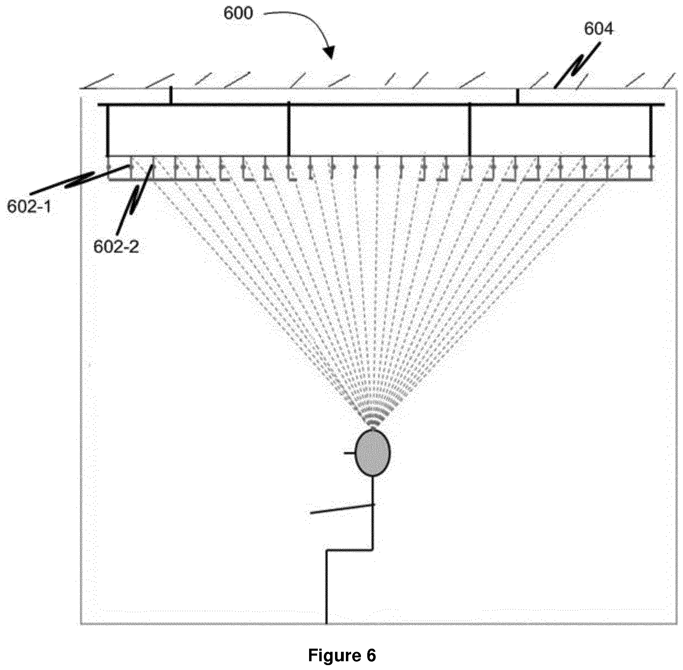

FIG. 6 illustrates an integrated heat transfer system 600 for providing one of heating and cooling in an indoor area in accordance with another example. As shown in FIG. 6, integrated heat transfer system 600 includes a plurality of monolithic radiant panels 602-n arranged about a surface 604 of the indoor area. Each monolithic radiant panel of the plurality of monolithic radiant panels 602-n is similar to monolithic radiant panel 100. The plurality of monolithic radiant panels 602-n is arranged in a parallel and/or serial configuration for providing one of heating and cooling in the indoor area. The arrangement of the plurality of monolithic radiant panels 602-n is configured to occupy about 30 percent to about 50 percent of surface 604 of the indoor area. Additionally, the arrangement of the plurality of monolithic radiant panels 602-n provides natural convection of air inside the indoor area.

Various embodiments of the invention provide a monolithic radiant panel arrangement. The monolithic radiant panel includes a tubular portion that is extruded from an aluminum alloy. This ensures higher heat transfer rate. Additionally, one or more monolithic radiant panels can be attached with a surface of the indoor area at a vertical position. The arrangement of the monolithic radiant panels at the vertical position ensures use of both sides of the monolithic radiant panels open to the indoor area. The heat from both sides of the monolithic radiant panels is easily transferred from the monolithic radiant panels to the indoor area. Further, fluid across a plurality of monolithic radiant panels can be made to flow in a counter flow arrangement to ensure uniform temperature across each monolithic radiant panel of the plurality of monolithic radiant panels. The system includes one or more fans to force convection of air in the indoor area. This ensures uniform transfer of heat from the monolithic radiant panels to the indoor area and provides a higher heat transfer rate.

Those skilled in the art will realize that the above-recognized advantages and other advantages described herein are merely exemplary and are not meant to be a complete rendering of all of the advantages of the various embodiments or the arrangement disclosed herein.

In the foregoing specification, specific embodiments of the invention have been described. However, one of ordinary skill in the art appreciates that various modifications and changes can be made without departing from the scope of the invention as set forth in the claims below. The invention is defined solely by the appended claims.

## Claims

1. A monolithic radiant panel arrangement configured to provide one of heating and cooling in an indoor area, the monolithic radiant panel arrangement comprising a monolithic radiant panel (100), the monolithic radiant panel (100) comprising:
a tubular portion (102) configured to circulate a fluid for enabling one of heating and cooling of the indoor area; and
two co-planar fin portions (104, 106) arranged diametrically opposite to each other about a periphery of the tubular portion (102), wherein at least one of:
at least one of the two co-planar fin portions (104, 106), and
the tubular portion (102)
is configured to be attached with a surface of the indoor area at an angle defined between a plane of the fin portions (104, 106) and the horizontal direction for providing one of heating and cooling in the indoor area,
wherein the monolithic radiant panel (100) is arranged along with a plurality of similar monolithic radiant panels (100) to provide one of heating and cooling in the indoor area, **characterized in that** the modular monolithic radiant panel (100) and the plurality of similar monolithic radiant panels (100) are arranged to form two parallel fluid flow circuits (402, 404), wherein the direction of fluid flow in one of the fluid flow circuits (402) is opposite to the direction of fluid flow in the other fluid flow circuit (404).

2. The monolithic radiant panel arrangement as claimed in claim 1, wherein at least one monolithic radiant panel (100) is composed of an aluminum alloy.

3. The monolithic radiant panel arrangement as claimed in claim 1, wherein the monolithic radiant panel (100) is coated with a material such that the monolithic radiant panel (100) has an emissivity of about 0.90 to about 0.99.

4. The monolithic radiant panel arrangement as claimed in claim 1, wherein the monolithic radiant panel (100) is about 3 meter to about 16 meter in length, about 100 millimeter to about 300 millimeter in width and about 1.5 millimeter to about 4 millimeter in thickness.

5. The monolithic radiant panel arrangement as claimed in claim 1, wherein the monolithic radiant panel (100) is about 3 meter to about 6 meter in length, about 100 millimeter to about 150 millimeter in width and about 1.5 millimeter to about 1.6 millimeter in thickness.

6. The monolithic radiant panel arrangement as claimed in claim 1, wherein the tubular portion (102) has an outer diameter of about 13 millimeter to about 21 millimeter and an inner diameter of about 10 millimeter to about 18 millimeter.

7. The monolithic radiant panel arrangement as claimed in claim 1, wherein at least one of:
at least one of the two co-planar fin portions (104, 106), and
the tubular portion (102)
is attached with the surface of the indoor area using an insulating material.

8. The monolithic radiant panel arrangement as claimed in claim 1, wherein the angle is selected from a range of 0 degrees to 90 degrees.

9. The monolithic radiant panel arrangement as claimed in claim 1, wherein the angle is 90 degrees.

10. The monolithic radiant panel arrangement as claimed in claim 1, wherein at least one monolithic radiant panel (100) is configured to be interlocked with at least one other similar monolithic radiant panel (100) to provide one of heating and cooling in the indoor area.

11. The monolithic radiant panel arrangement as claimed in claim 1, wherein the monolithic radiant panel (100) is configured to be arranged at a distance of about 0 millimeter to about 300 millimeter from at least one other similar monolithic radiant panel (100) about the surface of the indoor area to provide one of heating and cooling in the indoor area.

12. The monolithic radiant panel arrangement as claimed in claim 1, wherein each of the first and second fluid flow circuits (402, 404) comprises a plurality of similar monolithic radiant panels (100) disposed in a serial alignment.

13. The monolithic radiant panel arrangement as claimed in claim 1, wherein each monolithic radiant panel (100, 406-n) of one of the two parallel fluid flow circuits (402, 404) is directly adjacent to a monolithic radiant panel (100, 406-n) of the other fluid flow circuit (402, 404).

14. The monolithic radiant panel arrangement as claimed in one of claims 1-13, further comprising an air convection assembly configured to force air convection in the indoor area, wherein the air convection assembly comprises at least one fan (506-1) .

15. The monolithic radiant panel arrangement as claimed in claim 14, wherein the air convection assembly is disposed in between the surface (504) of the indoor area and the plurality of monolithic radiant panels (100,406-n).

## Patentansprüche

1. Eine Monolithisches-Strahlungspaneel-Anordnung, die konfiguriert ist, um eines von einem Heizen und Kühlen in einem Innenraumbereich zu ermöglichen, wobei die Monolithisches-Strahlungspaneel-Anordnung ein monolithisches Strahlungspaneel (100) aufweist, wobei das monolithische Strahlungspaneel (100) aufweist:
einen röhrenförmigen Abschnitt (102), der konfiguriert ist zum Zirkulieren eines Fluides, um eines von dem Heizen und dem Kühlen des Innenraumbereichs zu ermöglichen; und
zwei komplanare Lamellenabschnitte (104, 106), die einander diametral gegenüberliegend um einen Umfang des röhrenförmigen Abschnitts (102) angeordnet sind, wobei mindestens einer von:
mindestens einem der beiden komplanaren Lamellenabschnitte (104, 106), und
dem röhrenförmigen Abschnitt (102)
konfiguriert ist, um an einer Fläche des Innenraumbereichs in einem Winkel, der zwischen einer Ebene der Lamellenabschnitte (104, 106) und der horizontalen Richtung definiert ist, befestigt zu sein, um eines von dem Heizen und dem Kühlen in dem Innenraumbereich bereitzustellen,
wobei das monolithische Strahlungspaneel (100) gemeinsam mit einer Mehrzahl von ähnlichen monolithischen Strahlungspaneels (100) angeordnet ist, um eines von dem Heizen und dem Kühlen in dem Innenraumbereich bereitzustellen, **dadurch gekennzeichnet, dass** das modulare monolithische Strahlungspaneel (100) und die Mehrzahl von ähnlichen monolithischen Strahlungspaneels (100) so angeordnet sind, dass sie zwei parallele Fluidfluss-Kreisläufe (402, 404) bilden, wobei die Fließrichtung des Fluides in einem der Fluidfluss-Kreisläufe (402) entgegengesetzt der Fließrichtung des Fluides in dem anderen Fluidfluss-Kreislauf (404) ist.

2. Die Monolithisches-Strahlungspaneel-Anordnung gemäß Anspruch 1, wobei mindestens ein monolithisches Strahlungspaneel (100) aus einer Aluminiumlegierung zusammengesetzt ist.

3. Die Monolithisches-Strahlungspaneel-Anordnung gemäß Anspruch 1, wobei das monolithische Strahlungspaneel (100) mit einem Material beschichtet ist, sodass das monolithische Strahlungspaneel (100) einen Emissionsgrad von ungefähr 0,90 bis ungefähr 0,99 hat.

4. Die Monolithisches-Strahlungspaneel-Anordnung gemäß Anspruch 1, wobei das monolithische Strahlungspaneel (100) ungefähr 3 Meter bis ungefähr 16 Meter lang ist, ungefähr 100 Millimeter bis ungefähr 300 Millimeter breit ist und ungefähr 1,5 Millimeter bis ungefähr 4 Millimeter dick ist.

5. Die Monolithisches-Strahlungspaneel-Anordnung gemäß Anspruch 1, wobei das monolithische Strahlungspaneel (100) ungefähr 3 Meter bis ungefähr 6 Meter lang ist, ungefähr 100 Millimeter bis ungefähr 150 Millimeter breit ist und ungefähr 1,5 Millimeter bis ungefähr 1,6 Millimeter dick ist.

6. Die Monolithische-Strahlungspanel-Anordnung gemäß Anspruch 1, wobei der röhrenförmige Abschnitt (102) einen Außendurchmesser von ungefähr 13 Millimeter bis ungefähr 21 Millimeter hat und einen Innendurchmesser von ungefähr 10 Millimeter bis ungefähr 18 Millimeter hat.

7. Die Monolithisches-Strahlungspaneel-Anordnung gemäß Anspruch 1, wobei mindestens einer von:
mindestens einem der beiden komplanaren Lamellenabschnitte (104, 106) und
dem röhrenförmigen Abschnitt (102)
unter Verwendung eines isolierenden Materials an der Fläche des Innenraumbereichs befestigt ist.

8. Die Monolithisches-Strahlungspaneel-Anordnung gemäß Anspruch 1, wobei der Winkel ausgewählt ist aus einem Bereich von o Grad bis 90 Grad.

9. Die Monolithisches-Strahlungspaneel-Anordnung gemäß Anspruch 1, wobei der Winkel 90 Grad ist.

10. Die Monolithisches-Strahlungspaneel-Anordnung gemäß Anspruch 1, wobei mindestens ein monolithisches Strahlungspaneel (100) konfiguriert ist, um mit mindestens einem anderen ähnlichen monolithischen Strahlungspaneel (100) wechselseitig gekuppelt zu werden, um eines von dem Heizen und dem Kühlen in dem Innenraumbereich bereitzustellen.

11. Die Monolithisches-Strahlungspaneel-Anordnung gemäß Anspruch 1, wobei das monolithische Strahlungspaneel (100) konfiguriert ist, um in einem Abstand von ungefähr o Millimeter bis ungefähr 300 Millimeter von mindestens einem anderen ähnlichen monolithischen Strahlungspaneel (100) um die Fläche des Innenraumbereichs angeordnet zu sein, um eines von dem Heizen und dem Kühlen in dem Innenraumbereich bereitzustellen.

12. Die Monolithisches-Strahlungspaneel-Anordnung gemäß Anspruch 1, wobei jeder von dem ersten und dem zweiten Fluidfluss-Kreislauf (402, 404) eine Mehrzahl von ähnlichen monolithischen Strahlungspaneels (100) aufweist, die in aufeinanderfolgender Anordnung angeordnet sind.

13. Die Monolithisches-Strahlungspaneel-Anordnung gemäß Anspruch 1, wobei jedes monolithische Strahlungspaneel (100, 406-n) von einem der zwei parallelen Fluidfluss-Kreisläufe (402, 404) direkt benachbart zu einem monolithischen Strahlungspaneel (100, 406-n) des anderen Fluidfluss-Kreislaufs (402, 404) angeordnet ist.

14. Die Monolithisches-Strahlungspaneel-Anordnung gemäß irgendeinem der Ansprüche 1 bis 13, ferner aufweisend eine Luft-Konvektionsvorrichtung, die konfiguriert ist, um in dem Innenraumbereich eine Luftkonvektion zu erzwingen, wobei die Luft-Konvektionsvorrichtung mindestens einen Ventilator (506-1) aufweist.

15. Die Monolithisches-Strahlungspaneel-Anordnung gemäß Anspruch 14, wobei die Luft-Konvektionsvorrichtung zwischen der Fläche (504) des Innenraumbereichs und der Mehrzahl von monolithischen Strahlungspaneels (100, 406-n) angeordnet ist.

## Revendications

1. Ensemble de panneau radiant monolithique configuré pour assurer l'un d'un chauffage et d'un refroidissement dans une zone d'intérieur,
l'ensemble de panneau radiant monolithique comprenant un panneau radiant monolithique (100), le panneau radiant monolithique (100) comprenant :
une partie tubulaire (102) configurée pour faire circuler un fluide afin de permettre l'un d'un chauffage et d'un refroidissement de la zone d'intérieur ; et
deux parties d'ailettes coplanaires (104, 106) prévues de manière diamétralement opposées l'une par rapport à l'autre autour d'une périphérie de la partie tubulaire (102), dans lequel au moins l'une :
d'au moins l'une des deux parties d'ailettes coplanaires (104, 106) et de la partie tubulaire (102) est configurée pour être reliée à une surface de la zone d'intérieur à un angle défini entre un plan des parties d'ailettes (104, 106) et la direction horizontale de façon à assurer l'un d'un chauffage et d'un refroidissement de la zone d'intérieur,
dans lequel le panneau radiant monolithique (100) est prévu avec une pluralité de panneaux radiants monolithiques similaires (100) afin d'assurer l'un d'un chauffage et d'un refroidissement dans la zone d'intérieur,
**caractérisé en ce que** le panneau radiant monolithique modulaire (100) et la pluralité de panneaux radiantes monolithiques similaires (100) sont prévus pour former deux circuits d'écoulement de fluide parallèles (402, 404), dans lequel la direction d'écoulement de fluide dans l'un des circuits d'écoulement de fluide (402) est opposée à la direction d'écoulement de fluide dans l'autre circuit d'écoulement de fluide (404).

2. Ensemble de panneau radiant monolithique selon la revendication 1, dans lequel au moins un panneau radiant monolithique (100) est composé d'un alliage d'aluminium.

3. Ensemble de panneau radiant monolithique selon la revendication 1, dans lequel le panneau radiant monolithique (100) est recouvert avec un matériau tel que le panneau radiant monolithique (100) présente une émissivité d'environ 0,90 à environ 0,99.

4. Ensemble de panneau radiant monolithique selon la revendication 1, dans lequel le panneau radiant monolithique (100) mesure environ 3 mètres à environ 16 mètres de long, environ 100 millimètres à environ 300 millimètres de largeur, et environ 1,5 millimètre à environ 4 millimètres d'épaisseur.

5. Ensemble de panneau radiant monolithique selon la revendication 1, dans lequel le panneau radiant monolithique (100) mesure environ 3 mètres à environ 6 mètres de long, environ 100 millimètres à environ 150 millimètres de largeur, et environ 1,5 millimètre à environ 1,6 millimètre d'épaisseur.

6. Ensemble de panneau radiant monolithique selon la revendication 1, dans lequel la partie tubulaire (102) possède un diamètre extérieur d'environ 13 millimètres à environ 21 millimètres et un diamètre intérieur d'environ 10 millimètres à environ 18 millimètres.

7. Ensemble de panneau radiant monolithique selon la revendication 1, dans lequel au moins l'une :
d'au moins l'une des deux parties d'ailettes coplanaires (104, 106) et de la partie tubulaire (102) est reliée à la surface de la zone d'intérieur à l'aide d'un matériau isolant.

8. Ensemble de panneau radiant monolithique selon la revendication 1, dans lequel l'angle est choisi entre 0 degré et 90 degrés.

9. Ensemble de panneau radiant monolithique selon la revendication 1, dans lequel l'angle est de 90 degrés.

10. Ensemble de panneau radiant monolithique selon la revendication 1, dans lequel au moins un panneau radiant monolithique (100) est configuré pour être encastré avec au moins un autre panneau radiant monolithique similaire (100) afin d'assurer l'un d'un chauffage et d'un refroidissement dans la zone d'intérieur.

11. Ensemble de panneau radiant monolithique selon la revendication 1, dans lequel le panneau radiant monolithique (100) est configuré pour être prévu à une distance d'environ 0 millimètre à environ 300 millimètres d'au moins un autre panneau radiant monolithique similaire (100) autour de la surface de la zone d'intérieur afin d'assurer l'un d'un chauffage et d'un refroidissement dans la zone d'intérieur.

12. Ensemble de panneau radiant monolithique selon la revendication 1, dans lequel chacun du premier et du second circuits d'écoulement de fluide (402, 404) comprend une pluralité de panneaux radiants monolithiques similaires (100) disposés selon un alignement en série.

13. Ensemble de panneau radiant monolithique selon la revendication 1, dans lequel chaque panneau radiant monolithique (100, 406-n) de l'un des deux circuits d'écoulement de fluide parallèles (402, 404) est directement adjacent à un panneau radiant monolithique (100, 406-n) de l'autre circuit d'écoulement de fluide (402, 404).

14. Ensemble de panneau radiant monolithique selon l'une des revendications 1 à 13, comprenant en outre un ensemble de convection d'air configuré pour forcer une convection d'air dans la zone d'intérieur, dans lequel l'ensemble de convection d'air comprend au moins un ventilateur (506-1).

15. Ensemble de panneau radiant monolithique selon la revendication 14, dans lequel l'ensemble de convection d'air est disposé entre la surface (504) de la zone d'intérieur et la pluralité de panneaux radiants monolithiques (100, 406-n).
